# EUROPÄISCHE PATENTSCHRIFT

(11) **EP 1 987 278 B1**
(45) Veröffentlichungstag und Bekanntmachung des Hinweises auf die Patenterteilung: **01.09.2010**
(21) Anmeldenummer: 07711394.2
(22) Anmeldetag: 27.01.2007
(51) Int. Cl.: F16K 17/10

(54) **VORGESTEUERTES DRUCKBEGRENZUNGSVENTIL**
PILOT-CONTROLLED PRESSURE LIMITING VALVE
SOUPAPE PRE-ASSERVIE DE LIMITATION DE LA PRESSION

(30) Priorität: 17.02.2006 DE 102006007363
(43) Veröffentlichungstag der Anmeldung: 05.11.2008
(73) Patentinhaber: Robert Bosch GmbH, 70442 Stuttgart (DE)
(72) Erfinder: WÖLFGES, Hans, 97816 Lohr am Main (DE)
(74) Vertreter: Thürer, Andreas
(86) Internationale Anmeldenummer: PCT/EP2007/000714
(87) Internationale Veröffentlichungsnummer: WO 2007/093273

(56) Entgegenhaltungen:
- DE-A1- 2 547 646
- DE-A1- 4 304 796
- DE-A1- 19 524 900

## Beschreibung

Die Erfindung betrifft ein vorgesteuertes. Druckbegrenzungsventil nach dem Oberbegriff des Patentanspruchs 1.

Ein solches herkömmliches Druckbegrenzungsventil ist z.B. in DE 4 304 796, in dem Datenblatt RD25731/10.05 oder dem Datenblatt RD 25818/08.03 der Firma Bosch Rexroth AG angegeben. Ein Hauptsteuerschieber oder Hauptsteuerkegel gibt bei Erreichen eines einstellbaren Grenzdrucks die Verbindung zwischen einem Eingangsanschluss und einem Tankanschluss frei. Das jeweilige Hauptsteuerglied - Kegel oder Schieber - ist an einer dem Eingangsanschluss zugewandten Steuerfläche mit dem Eingangsdruck in Öffnungsrichtung beaufschlagt. Eine dem Eingangsanschluss abgewandte Steuerfläche begrenzt einen Steuerdruckraum. Darin befindet sich eine Feder, die das Hauptsteuerglied in Schließrichtung beaufschlagt. Des Weiteren wird im Steuerdruckraum ein Steuerdruck aufrechterhalten. Der Steuerdruck ist durch ein Vorsteuer-Druckbegrenzungsventil einstellbar. Die Versorgung des Vorsteuerventils mit Steuerfluid erfolgt über eine im Hauptsteuerglied zentral angeordnete Drosselbohrung geringen Querschnitts. Diese Bohrung verbindet den Steuerdruckraum mit dem Eingangsanschluss.

Eine wichtige Kenngröße des Druckbegrenzungsventils ist sein Gleichdruckverhalten. Dazu betrachtet man die Veränderung des Eingangsdrucks P mit dem Volumenstrom Q, der durch das Druckbegrenzungsventil zum Tank abgeführt wird. Die Kennlinie P(Q) steigt systembedingt an.

Eine Ursache für diesen Anstieg der P(Q) Kennlinie sind Strömungskräfte, die am Hauptsteuerglied auftreten, wenn dieses öffnet. Im Bereich um die ringförmige Öffnungsfläche treten hohe Strömungsgeschwindigkeiten im abfließenden Druckmittel auf. Demzufolge ist dort nach der Formel von Bemoulli der statische Flüssigkeitsdruck erniedrigt. In den Randbereichen des Hauptsteuerglieds wird die dem Eingang zugewandte Steuerfläche also mit einem niedrigeren Druck als dem Eingangsdruck beaufschlagt. Die Gleichgewichtsbedingung am Hauptsteuerglied, nach der die Kraft der Feder und die durch den Steuerdruck auf das Hauptsteuerglied ausgeübte Kraft einerseits und andererseits die an der eingangsseitigen Steuerfläche ausgeübte Kraft gleich sein müssen, um das Druckbegrenzungsventil geöffnet zu halten, bedingt das Ansteigen des Eingangsdruckes bei steigendem Volumendurchsatz. Diesen Effekt kann man, wie gesagt, durch das Bild von Strömungskräften beschreiben, die in Schließrichtung des Hauptsteuerglieds wirken, und die durch einen höheren Eingangsdruck zu kompensieren sind. Einen gewissen Anstieg der P(Q) Kennlinie kann man also kaum vermeiden. Bei Sitzventilen macht man sich die Strömungskräfte sogar zu nutze, um eine Dämpfung des Hauptsteuerkegels zu erzielen.

Bei den beschriebenen herkömmlichen vorgesteuerten Druckbegrenzungsventilen tritt zudem noch eine Zunahme der Steuerfluidmenge ein, wenn sich der Eingangsdruck erhöht. Dies führt wegen weiterer Drosselstellen im Steuerfluidpfad zum Vorsteuerventil und wegen der ebenfalls ansteigenden P(Q)-Kennlinie des Vorsteuerventils zu einer Verstärkung des Anstiegs in der P(Q) Kennlinie des vorgesteuerten Druckbegrenzungsventils.

Es ist die Aufgabe der vorliegenden Erfindung ein verbessertes Druckbegrenzungsventil anzugeben, das insbesondere ein gutes Gleichdruckverhalten aufweist, einen zuverlässigen Betrieb ermöglicht und das einfach zu fertigen ist.

Diese Aufgabe wird erfindungsgemäß durch ein vorgesteuertes Druckbegrenzungsventil mit den Merkmalen des Patentanspruchs 1 gelöst.

Das erfindungsgemäße Druckbegrenzungsventil besitzt ein Steuerglied, welches in Öffnungsrichtung an einer ersten Steuerfläche von einem zu begrenzenden Druck beaufschlagbar ist und welches in Schließrichtung von einer Feder und an einer zweiten Steuerfläche von einem in einem Steuerdruckraum herrschenden Steuerdruck beaufschlagbar ist. Durch ein Vorsteuerventil ist der in dem Steuerdruckraum herrschende Druck begrenzbar. Dem Steuerdruckraum ist Steuerfluid durch das Steuerglied hindurch über eine Steuerfluiddüse zuführbar.

Die Besonderheit der vorliegenden Erfindung ist es, dass vor der ersten Steuerfläche ein Teller am Steuerglied gehalten ist. Zwischen dem Teller und der ersten Steuerfläche ist ein Spalt mit einem vorgegebenen Spaltmaß gebildet. Dieser Spalt liegt stromauf der Steuerfluiddüse, d.h. das Steuerfluid, dass der Steuerfluiddüse zugeführt wird, fließt durch den Spalt. Auf diese Weise wird mittels eines einfach zu fertigenden und zu montierenden Bauteils - nämlich des Tellers - eine über die erste Steuerfläche weiträumig ausgedehnte spaltförmige Abgriffstelle für die Steuerfluidversorgung geschaffen. Diese Abgriffstelle besitzt eine sehr gute Filterwirkung. Die Spaltöffnung oder ein Großteil der Spaltöffnung befindet sich durch die flächige Ausdehnung des Tellers im Randbereich der ersten Steuerfläche und damit in einem Bereich in dem bei geöffneten Steuerglied durch abströmendes Druckmittel hohe Strömungsgeschwindigkeiten auftreten. Dadurch wird ein Festsetzen von Schmutzpartikeln am Spalt verhindert. Das durch die Spaltöffnung gebildete Spaltfilter verhindert ein Zusetzen der Steuerfluiddüse im Steuerglied und einer Dämpfungsdüse vor dem Vorsteuerventil. Dadurch wird die sichere Funktion des Ventils gewährleistet. Außerdem wird in dem Randbereich der ersten Steuerfläche durch die Erniedrigung des statischen Drucks im strömenden Druckmittel eine Erhöhung des Druckniveaus bei Ansteigen der durch das Druckbegrenzungsventil abzuführende Fluidmenge Q teilweise kompensiert. Durch Vorsehen des Tellers lässt sich also eine Erhöhung der Steuerfluidmenge, die in den Steuerdruckraum strömt, weitgehend vermeiden und ein Anstieg des Vorsteuerdrucks und als Folge auch ein Anstieg der P(Q)-Kennlinie des vorgesteuerten Druckbegrenzungsventils verringern. So ist ein gutes Gleichdruckverhalten realisiert. Durch Anpassen der Formgebung und Größe des Tellers kann das Gleichdruckverhalten auf einfache Weise optimiert werden: Hervorzuheben ist nochmals die durch den Teller besonders einfach und kostengünstig auszuführende Fertigung und Montage des erfindungsgemäßen Druckbegrenzungsventils, bei dem eine Filterfunktionalität am Steuerfluidabgriff und eine Kompensation des Anstiegs der P(Q) Kennlinie erzielt wird. Am Hauptsteuerglied selbst ist, ausgehend von einer herkömmlichen Gestaltung, nur eine geringe Modifikation erforderlich.

Weitere vorteilhafte Ausgestaltungen sind in den Unteransprüchen angegeben.

Das Spaltmaß lässt sich einfach und zuverlässig festlegen, wenn das Steuerglied eine Erhebung aufweist, auf der der Teller aufliegt. Ebenso kann zu diesem Zweck an einer dem Steuerglied zugewandten Seite des Tellers eine Erhebung gebildet sein, mit der der Teller auf dem Steuerglied aufliegt. Dies erleichtert die Herstellung des Ventils nochmals, da es einfacher ist, eine Erhebung am Teller zu fertigen, als an dem Steuerglied. Der Teller kann nämlich aus einem leichter verarbeitbaren Material, als das Steuerglied, welches zumeist aus gehärteten Stahl besteht, gefertigt werden. Eine noppenförmige Prägung des Tellers lässt sich besonders einfach herstellen.

Gemäß einer bevorzugten Weiterbildung der Erfindung weist der Teller einen hülsenförmig ausgebildeten Abschnitt auf, der von einer dem Steuerglied zugewandten Seite des Tellers vorsteht, der ein Befestigungsmittel aufnimmt, und mit dem der Teller auf dem Steuerglied aufsitzt. Ein solcher Teller ist ein einfach zu fertigendes Bauteil, z.B. mittels eines Press- oder Prägevorgangs. Der hülsenförmige Abschnitt dient gleichzeitig der Befestigung und als Abstandshalter, zur Festlegung des Spaltmaßes. Somit sind der Ort der Spaltöffnung sowie das Spaltmaß durch die geometrischen Eigenschaften des Tellers alleine festgelegt. Zur Variation des Spaltmaßes sowie der radialen Ausdehnung des Spaltes auf der ersten Steuerfläche ist lediglich der Teller zu tauschen.

Die Montage des Tellers auf dem Steuerglied ist besonders einfach, wenn am Teller ein kreiszylinderförmiger Gewindeabschnitt gebildet ist, mit dem der Teller in einer Bohrung des Steuerglieds befestigt ist. Dann kann der Teller einfach eingeschraubt werden.

Eine weitere bevorzugte Ausgestaltung der vorliegenden Erfindung sieht vor, dass die Steuerfluiddüse durch eine Bohrung im Gewindeabschnitt gebildet ist. Dies führt zu einem besonders geringen Herstellungsaufwand für das Steuerglied, da sich dieses nun als rotationssymmetrisches Bauteil mit nur einer zentrale Einschrauböffnung fertigen lässt.

Eine besonders bevorzugte Ausgestaltung der vorliegenden Erfindung sieht vor, dass die Steuerfluiddüse durch eine Bohrung im Steuerglied gebildet ist und dass eine Öffnung der Bohrung durch den Teller verdeckt ist. Dies erlaubt es, für den Teller eine hinsichtlich der Herstellung besonders einfache Form zu wählen, die mit wenigen Bearbeitungsschritten herstellbar ist.

Ein bevorzugte Form für den Teller ist - in Hinblick auf den Herstellungsaufwand - die einer Kreisscheibe.

Vorzugsweise ist der Teller aus leicht zu verarbeitenden Metall, z.B. Messing, Aluminium oder ungehärteter Stahl gefertigt. Dies erleichtert die Herstellung. Das Steuerglied ist üblicherweise aus gehärteten Stahl gefertigt. Eine in es eingebrachte Düsenbohrung verzundert beim Härten und muss nachbearbeitet werden. Eine solche Nachbearbeitung entfällt, wenn die Düsenbohrung im Teller, der aus ungehärteten Material besteht, ausgeführt wird.

Ein zuverlässiger Betrieb des Druckbegrenzungsventils kann sichergestellt werden, wenn das Spaltmaß geringer ist als der Durchmesser der Steuerfluiddüse bzw. geringer als der Durchmesser einer Dämpfungsdüse vor dem Vorsteuerventil. Dadurch ist eine Verstopfung der Düsen durch Schmutzpartikel ausgeschlossen.

Eine ausreichende Filterwirkung für das Steuerfluid erreicht man, wenn das Spaltmaß geringer als 0.3 Millimeter ist. Vorzugsweise wird ein Wert zwischen 0.25 Millimeter und 0.15 Millimeter gewählt.

Eine weitere bevorzugte Ausgestaltung der vorliegenden Erfindung sieht vor, dass die Steuerfluiddüse zu einer ringförmigen Vertiefung in der ersten Steuerfläche bzw. zu einer ringförmigen Vertiefung in einer der ersten Steuerfläche zugewandten Seite des Tellers hin öffnet. Eine solche Vertiefung erlaubt den gleichmäßigen Zustrom von Steuerfluid über die gesamte Spaltlänge. Sie verringert außerdem einen am Übergang von dem Spalt zu einer Bohrung ansonst auftretenden Strömungswiderstand und beugt somit einem Materialverschleiß vor.

Gemäß einer besonders bevorzugten Ausgestaltung ist der Teller an einem Hauptsteuerkegel des Druckbegrenzungsventils gehalten. Insbesondere bei einem als Sitzventil ausgebildeten vorgesteuerten Druckbegrenzungsventil ändert sich der statische Druck im Bereich der Öffnung am Ventilsitz stark in Abhängigkeit von der Durchflussmenge. Dieser Effekt lässt sich sehr gut dafür nutzen, eine Zunahme der Steuerfluidmenge, die mit steigender Abflussmenge durch das Ventil auftritt, zu verringern, indem durch den Teller der Abgriff des Steuerfluids in einem Randbereich des Hauptsteuerkegels erfolgt.

Nachfolgend werden die vorliegende Erfindung und deren Vorteile unter Bezugnahme auf die in den Figuren dargestellten Ausführungsbeispiete näher erläutert.

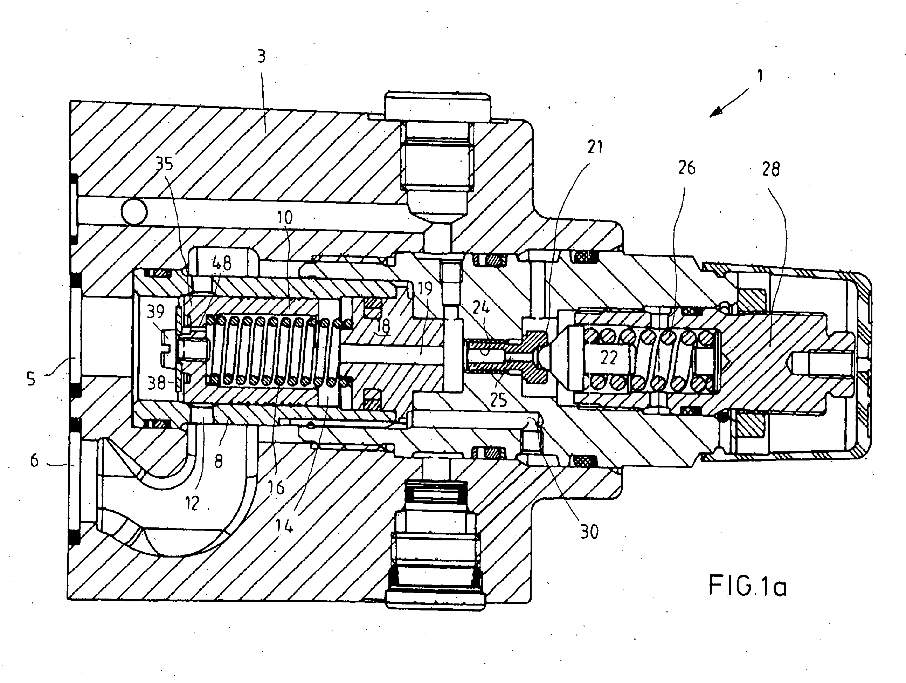

- Figur 1a: zeigt ein vorgesteuertes Druckbegrenzungsventil in Sitzventilbau- weise, dessen Hauptsteuerkegel stirnseitig einen Teller trägt, in einem Längsschnitt entlang einer Achse des Hauptsteuerkegels,
- Figur 1 b: ist eine vergrößerte Darstellung eines Bereichs um den Hauptsteuerkegel des in Figur 1a dargestellten Druckbegren- zungsventils,
- Figur 2: zeigt einen mit einem Teller versehenen Hauptsteuerkegel gemäß einer weiteren Ausführungsform der Erfindung und
- Figur 3: zeigt einen mit einem Teller versehenen Hauptsteuerkegel gemäß einer dritten Ausführungsform der Erfindung.

Gemäß Figur 1a weist ein vorgesteuertes Druckbegrenzungsventil 1 ein Ventilgehäuse 3 auf, das mit einem Eingangsanschluss 5 und einem Tankanschluss 6 versehen ist. In das Ventilgehäuse 3 ist eine Ventilpatrone eingeschraubt. Diese ist funktionell in eine Hauptstufe und in eine Vorsteuerstufe unterteilt. Die Hauptstufe besteht im Wesentlichen aus einer Hülse 8 in der ein Hauptsteuerkegel 10 beweglich geführt ist. Der Innenquerschnitt der Hülse 8 ist in dem dem Eingangsanschluss 5 zugewandten Bereich der Hülse 8 verengt, so dass ein Sitz gebildet ist, auf dem der Hauptsteuerkegel 10 im geschlossenen Zustand der Hauptstufe aufliegt. In der Hülse 8 befinden sich radial ausgeführte Bohrungen 12, durch die bei geöffneter Hauptstufe Druckmittel aus dem Eingangsanschluss 5 zum Tankanschluss 6 hin abfließt. Der Hauptsteuerkegel 10 begrenzt in einem dem Eingangsanschluss 5 abgewandten Abschnitt der Hülse 8 einen Federraum 14. Darin befindet sich eine Feder 16, die den Hauptsteuerkegel 10 in Schließrichtung beaufschlagt. Die Feder 16 stützt sich an einer Abschlusskappe 18 ab, die auf die Hülse 8 aufgesetzt ist. Durch die Abschlusskappe 18 verläuft ein Fluidkanal 19 zur Vorsteuerstufe.

Die Vorsteuerstufe ist ihrerseits mit einem Hülseneinsatz 21 und mit einem Vorsteuerkegel 22 als Druckbegrenzungsventil in Sitzbauweise ausgebildet. Durch den Hülseneinsatz 21 verläuft in Fortsetzung des Fluidkanals 19 ein Fluidkanal 24, der sich in eine Dämpfungsdüse 25 verengt. Die stirnseitige, dem Vorsteuerkegel 22 zugewandte Öffnung der Dämpfungsdüse 25 ist als Ventilsitz für den Vorsteuerkegel 22 ausgeformt. Durch die Feder 26 ist der Vorsteuerkegel 22 in Richtung des Hülseneinsatzes 21 beaufschlagt, so dass er im geschlossenen Zustand der Vorsteuerstufe die ihm zugewandte Öffnung der Dämpfungsdüse 25 schließt. Die von der Feder 26 auf den Vorsteuerkegel 22 ausgeübte Kraft lässt sich durch eine Einschraubbüchse 28 einstellen, in deren Innenbohrung sich die Feder 26 abstützt. Über einen Kanal 30 wird durch die Vorsteuerstufe über die Dämpfungsdüse 25 abgelassenes Steuerfluid zum Tankanschluss 6 hin abgeführt.

Am Hauptsteuerkegel 10 ist mittels einer Schraube 39 ein Teller 38 in einem vorgegebenen Abstand gehalten. Verdeckt durch den Teller 38 führt eine Steuerfluiddüse 48 Steuerfluid von dem Eingangsanschluss 5 - durch den Kopfabschnitt 35 des Hauptsteuerkegels 10 hindurch - dem Federraum 14 zu.

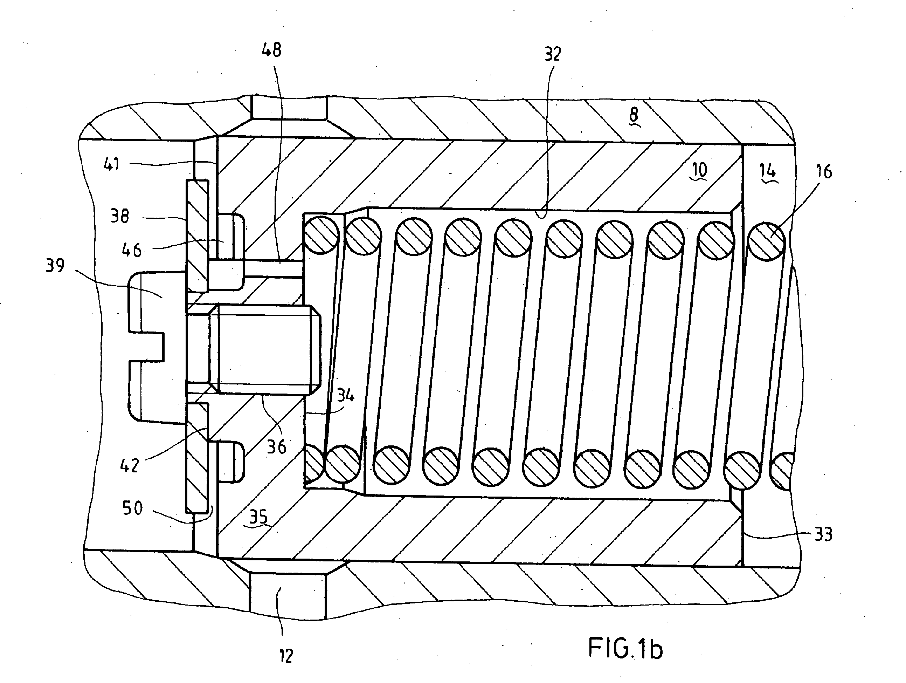

Der Bereich um den Hauptsteuerkegel 10 ist in der Figur 1b vergrößert dargestellt. Der Hauptsteuerkegel 10 besitzt einen rotationssymmetrischen Grundkörper mit einer zentralen sacklochartigen Vertiefung 32, die zum Federraum 14 hin öffnet und die Feder 16 größtenteils aufnimmt. Der Hauptsteuerkegel 10 begrenzt somit den Federraum 14 mit der Ringfläche 33, der Zylindermantelfläche der Vertiefung 32 und der Stirnfläche 34 der Vertiefung 32. Im Kopfabschnitt 35 des Hauptsteuerkegels 10 ist eine mit einem Innengewinde versehene Bohrung 36 gefertigt. Die Bohrung 36 dient dazu, den kreisscheibenförmigen Teller 38 mittels der Schraube 39 an dem Hauptsteuerkegel 10 zu halten. Der Teller 38 sitzt auf einer Erhebung 42 in der dem Eingangsanschluss 5 zugewandten Stirnfläche 41 des Hauptsteuerkegels 10 auf. Die Erhebung 42 erstreckt sich im Wesentlichen rotationssymmetrisch um den Bereich der zentral angeordneten Befestigungsbohrung 36, hat jedoch eine geringere radiale Ausdehnung als der Teller 38. Somit ist zwischen dem Teller 38 und der Stirnfläche 41 ein Spalt 50 gebildet. In einem durch den Teller 38 verdeckten Bereich der Stirnfläche 41 ist eine Ringnut 46 eingearbeitet. Diese geht in die Steuerfluiddüse 48 über, die von der Stirnfläche 41 ausgehend in die Sacklochvertiefung 32 mündet.

Im Folgenden wird die Funktion des erfindungsgemäßen Druckbegrenzungsventils 1 erläutert.

Der Spalt 50 bildet an der äußeren, der Stirnfläche 41 zugewandten Kante des Tellers 38 eine ringförmige Einlassöffnung für die interne Steuerfluidversorgung des Federraums 14. Von dem Spalt 50 ausgehend verläuft der Steuerfluidpfad weiter über die Ringnut 46 und die Steuerfluiddüse 48 in die zu dem Federraum 14 hin öffnende Vertiefung 32 des Hauptsteuerkegels 10. Der Hauptsteuerkegel 10 ist vom Eingangsanschluss 5 her an seiner Stirnfläche 41 mit dem am Eingangsanschluss 5 herrschenden Druck in Öffnungsrichtung beaufschlagt. In Schließrichtung wirkt die Kraft der Feder 16 und der im Federraum 14 herrschende, auf die Flächen 33 und 34 einwirkende Steuerdruck. Solange der Vorsteuerkegel 22 den Hülseneinsatz 21 verschließt, herrscht im Federraum 14 der gleiche Druck wie im Eingangsanschluss 5. Somit bleibt der Hauptsteuerkegel 10 aufgrund der Wirkung der Feder 16 geschlossen. Steigt der Druck im Federraum 14 über einen bestimmten, durch Verdrehen der Einschraubbüchse 28 einstellbaren Wert an, so öffnet die Vorsteuerstufe 21, 22 und begrenzt den Druck im Federraum 14 auf den eingestellten Wert. Steigt nun der am Eingangsanschluss vorliegende Druck über einen Wert, der dem Druckäquivalent der Feder 16 bezogen auf die Fläche 41 zuzüglich dem im Federraum 14 herrschenden Steuerdruck entspricht, so hebt der Hauptsteuerkegel 10 von seinem Sitz ab, so dass Druckmittel aus dem Eingangsanschluss 5 durch die Bohrung 12 zum Tankanschluss 6 abfließt.

In einem strömenden Fluid ist nach der Gesetzmäßigkeit von Bernoulli der statische Druck reduziert. Wenn Fluid am geöffneten Hauptsteuerkegel 10 vorbei durch die Bohrung 12 abfließt, ist somit die Stirnfläche 41 des Hauptsteuerkegels 10 an ihrem Randbereich mit einem geringeren Fluiddruck beaufschlagt. Somit ist auch die aus der Druckbeaufschlagung der Stirnfläche 41 resultierende Kraft in Öffnungsrichtung reduziert. Soll der Hauptsteuerkegel 10 dennoch geöffnet bleiben, so dass eine bestimmte Menge Q an Druckmittel zum Tankanschluss 6 hin abfließen kann, so muss gemäß dem am Hauptsteuerkegel 10 sich einstellenden Kräftegleichgewicht der im Eingangsanschluss 5 herrschende Druck P ansteigen, um die Druckemiedrigung am Rand der Stirnfläche 41 auszugleichen. Die durch die Feder 16 ausgeübte Schließkraft steigt bei größerer Öffnung des Hauptsteuerkegels 10 ebenfalls an und trägt daher auch zu einem Druckanstieg bei Ansteigen der abzuführenden Fluidmenge Q bei.

Würde man, wie bei herkömmlichen Druckbegrenzungsventilen, das dem Federraum 14 zugeführte Steuerfluid durch eine zentrale Düsenbohrung in der Stirnfläche 41 zuleiten, so würde der im Eingangsanschluss 5 herrschende Druck beinahe unverändert an der Düsenbohrung anstehen, da an dieser Stelle keine Fluidströmung herrscht. Eine Druckerhöhung im Eingangsanschluss 5 würde daher zu einem entsprechenden Druckanstieg an der Abgriffsöffnung der zentralen Düsenbohrung führen. Die Folge wäre eine erhöhte Menge an Steuerfluid, die über eine solche zentrale Düsenbohrung in den Federraum 14 gelangt. Da die Kanäle 19 und 24 und die Dämpfungsdüse 25 weitere Drosselstellen darstellen, und da die Vorsteuerstufe ebenfalls keine ideale Steuerdruck-Steuerfluidmenge-Kennlinie besitzt, wäre ein Druckanstieg im Federraum 14 die Folge, der einen zusätzlichen Druckanstieg im Eingangsanschluss 5, vor der Stirnfläche 41 bedingt, um den Hauptsteuerkolben 10 geöffnet zu halten.

Durch den Teller 38, der als Aufsatz vor der Stirnfläche 41 am Hauptsteuerkegel 10 befestigt ist, ist die Abgriffstelle für das Steuerfluid im Randbereich der Stirnfläche 41 angeordnet. Genauer gesagt, entspricht die Abgriffstelle nun der ringförmigen Öffnung des Spaltes 50, die zwischen der der Stirnfläche 41 zugewandten äußeren Kante des Tellers 38 und der Stirnfläche 41 besteht. An der Spaltöffnung wird eine Erhöhung des Fluiddrucks im Eingangsanschluss 5 bei einem Anstieg der zum Tank abzuführenden Fluidmenge Q durch einen durch die Fluidströmung im Randbereich der Stirnfläche 41 erniedrigten Fluiddruck wenigstens teilweise kompensiert. Dadurch kann ein Anstieg der dem Federraum 14 zugeführten Steuerfluidmenge vermindert werden. In Folge ergibt sich ein geringerer Druckanstieg im Eingangsanschluss 5 mit Zunahme der abzuführenden Fluidmenge Q.

Der Radius des Teller 38 muss genau auf die Gegebenheiten am Ventil 1 abgestimmt sein. Bei einem zu großen Teller 38 besteht die Gefahr, dass bei Anstieg der Strömungsgeschwindigkeit bei einer Zunahme der abzuführenden Fluidmenge Q der Druck an der Spaltöffnung des Spaltes 50 so weit erniedrigt wird, dass der Federraum 14 nicht mehr ausreichend mit Steuerfluid versorgt wird. Dann könnte durch Wegfallen des Drucks im Federraum 14 der Hauptsteuerkolben schlagartig öffnen und auch unterhalb des über die Vorsteuerstufe eingestellten Drucks geöffnet bleiben. Unter Beachtung dieses Sicherheitsaspektes wird der Radius des Tellers 38 so gewählt, dass selbst noch oberhalb des für das Druckbegrenzungsventil 1 zulässigen maximalen Volumenstroms eine zuverlässige Versorgung des Federraums 14 mit Steuerfluid gewährleistet ist.

Aufgrund der großen Länge der Spaltöffnung kann das Spaltmaß sehr gering ausfallen, ohne dass ein gegenüber dem Strömungswiderstand der Steuerfluiddüse 48 relevanter Strömungswiderstand am Spalt 50 auftritt. Durch das geringe Spaltmaß erzielt man eine gute Grobfiltration des Steuerfluids. Insbesondere dadurch, dass die Steuerfluiddüse 48 bzw. die Kanäle 19 und 24 sowie die Dämpfungsdüse 25 einen größeren Querschnitt als das Spaltmaß aufweisen, wird eine Blockade des Steuerfluidzulaufs bzw. der Vorsteuerstufe wirkungsvoll verhindert.

Der Teller 38 ist durch seine Lochkreisscheibenform sehr einfach zu fertigen. Die Fertigung kann z.B. durch das Abschneiden von einem Rohr- oder Stangenmaterial durchgeführt werden. Da der Teller 38 geringen mechanischen Belastungen ausgesetzt ist, wird zweckmäßigerweise ein einfach zu bearbeitendes Material, z.B. ungehärteter Stahl, Aluminium oder Messing, verwendet.

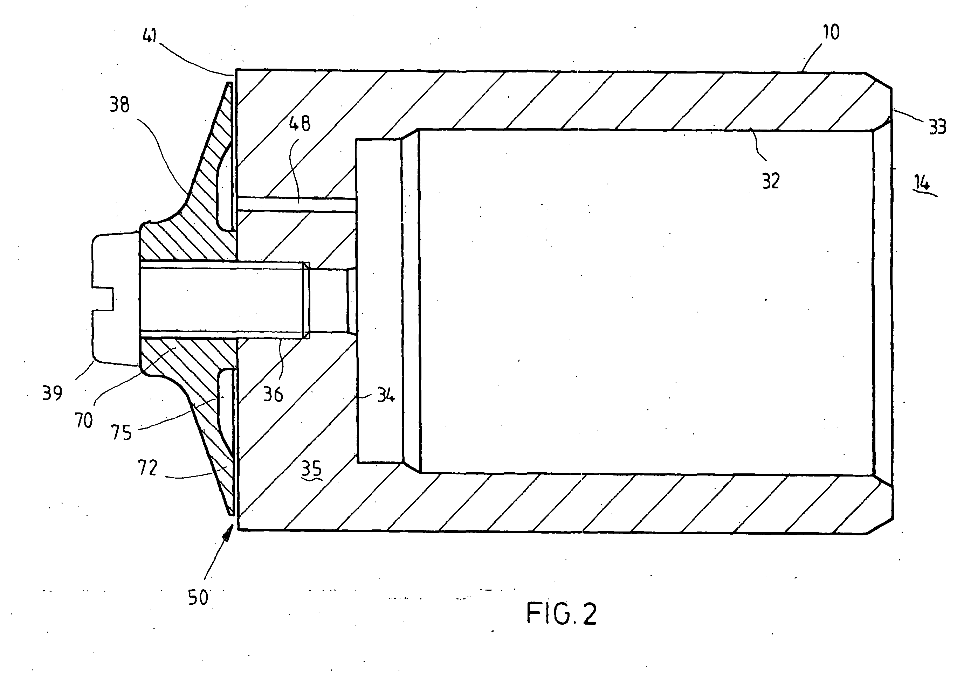

Die Figur 2 zeigt eine zweite Ausführungsform der vorliegenden Erfindung, die eine leichte Abwandlung der anhand der Figuren 1a und 1b beschriebenen Ausführungsform darstellt. Lediglich der Hauptsteuerkegel 10 und der Teller 38 gemäß der zweiten Ausführungsform unterscheiden sich geringfügig von der ersten Ausführungsform, wie in der nachfolgender Beschreibung dargestellt. Die weiteren Komponenten des Druckbegrenzungsventils 1 entsprechen den jeweiligen Komponenten der ersten Ausführungsform.

Bei dem Hauptsteuerkegel 10 gemäß der zweiten Ausführungsform weicht im Wesentlichen nur die Gestaltung des Kopfabschnitts 35 von der ersten Ausführungsform ab. Die Stirnfläche 41, mit der der Kopfabschnitt 35 des Hauptsteuerkegels 10 abschließt, ist als plane Fläche ausgeführt. Lediglich die zentrale Bohrung 36 mit Innengewinde und die Steuerfluiddüse 48 durchdringen den Kopfabschnitt 35, wie abgebildet.

Der Teller 38 ist als hutförmiger Aufsatz ausgebildet. Dieser untergliedert sich in einen hülsenförmigen Zentralabschnitt 70 und einen vom Zentralabschnitt 70 radial vorstehenden Kragenabschnitt 72. Der Zentralabschnitt 70 nimmt die Schraube 39 in seiner Hülsenöffnung auf und sitzt auf der Stirnfläche 41 auf.

Mit einem gewissen axialen Abstand zur Stirnfläche 41 setzt der Kragenabschnitt 72 am Zentralabschnitt 70 an. Nahe des Zentralabschnitts 70 weißt der Kragenabschnitt 72 zudem auf der der Stirnfläche 41 zugewandten Seite eine ringnutartige Vertiefung 75 auf.

Da der Zentralabschnitt 70 an der der Stirnfläche 41 zugewandten Seite des Tellers 38 vorsteht, ist zwischen dem Kragenabschnitt 72 und der Stirnfläche 41 ein hohlzylinderförmiger Spalt 50 gebildet. Zwischen der äußeren, der Stirnfläche 41 zugewandten Kante des Kragenabschnitts 72 und der Stirnfläche 41 besteht eine ringförmige Spaltöffnung. Im Bereich der ringnutartigen Vertiefung 75 vergrößert sich der Raum zwischen dem Kragenabschnitt 72 und der Stirnfläche 41. Von dort aus, verdeckt durch den Kragenabschnitt 72, führt die Steuerfluiddüse 48 durch den Kopfabschnitt 35 zum Federraum 14.

Vorteilhaft an dieser Formgebung des Hauptsteuerkegels 10 und des Tellers 38 ist, dass nur eine minimale Bearbeitung des Hauptsteuerkegels 10 am Kopfabschnitt 35 erforderlich ist, da dieser abgesehen von der Steuerfluiddüse 38 und der Bohrung 36 eine plane Stirnfläche 41 besitzt. Das Spaltmaß, die Umfangslänge der Öffnung des Spalts 50 und die Tiefe der Ringnut 75 sind vollständig durch die Gestaltung des Tellers 38 festgelegt. Da der Teller 38 einer geringeren mechanischen Belastung unterliegt als der Hauptsteuerkegel 10, kann der Teller 38 aus einem leicht bearbeitbaren Material, z.B. ungehärteter Stahl, Aluminium oder Messing, gefertigt werden. Infolgedessen ist es günstig, möglichst viele der Bearbeitungsschritte, die mit der Steuerfluidzuführung zusammenhängen - z.B. Herstellen der Ringnut 75 -, am Teller 38 anstatt am Hauptsteuerkegel 10 auszuführen.

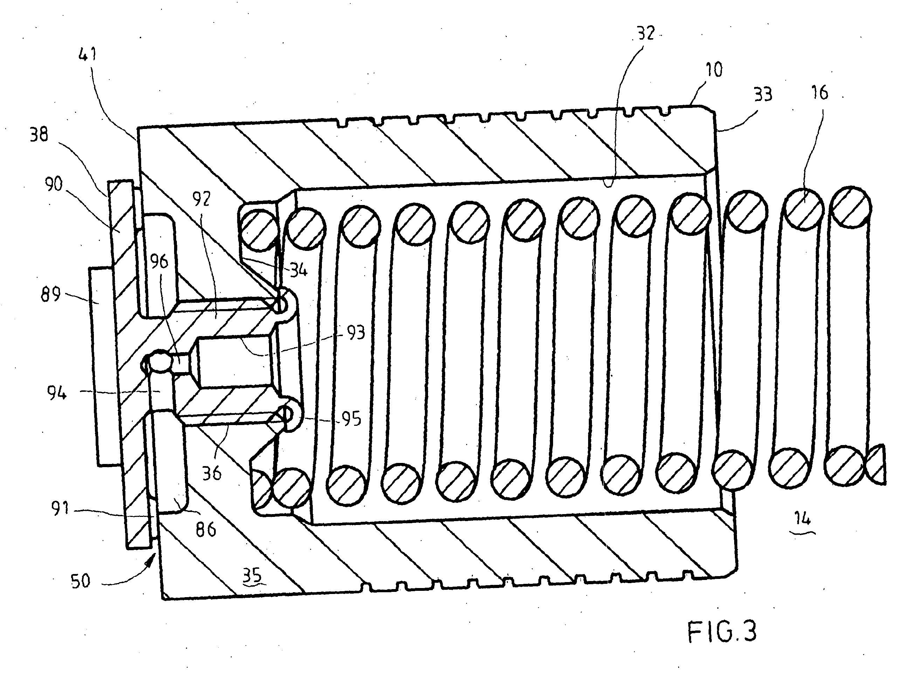

In Figur 3 ist als dritte Ausführungsform der vorliegenden Erfindung eine weitere Möglichkeit für die Gestaltung des Hauptsteuerkegels 10 mit dem daran befestigten Teller 38 dargestellt. Die weiteren Komponenten des Druckbegrenzungsventils 1 entsprechen den jeweiligen Komponenten der ersten Ausführungsform.

Der Hauptsteuerkegel 10 gemäß der dritten Ausführungsform unterscheidet sich nur in der Gestaltung des Kopfabschnitts 35 gegenüber der ersten bzw. zweiten Ausführungsform. Der Kopfabschnitt 35 ist nur durch die zentrale Bohrung 36 durchbrochen. Die Bohrung 36 ist mit einem Innengewinde versehen. Außerdem weist die Stirnfläche 41 des Kopfabschnitts 35 um die Bohrung 36 herum eine axial symmetrische Vertiefung 86 auf.

Der Teller 38 ist im wesentlichen rotationssymmetrisch geformt und entlang seiner Achsrichtung in mehrere Abschnitte unterteilt. Dem Eingangsanschluss 5 zugewandt besitzt der Teller 38 einen Kopfabschnitt 89, an dem eine Schlüsselfläche zum Ansetzen eines Befestigungswerkzeugs gebildet ist. Dieser geht in einen kreisscheibenförmigen Abschnitt 90 über, der radial über die Vertiefung 86 vorsteht. Mit am kreisscheibenförmigen Abschnitt 90 eingeprägten noppenförmige Ausbuchtungen 91 liegt der Teller 38 auf der Stirnfläche 41 auf. Die noppenförmigen Ausbuchtungen 91 sind radial außerhalb der Vertiefung 86 gebildet. Die in Figur 3 dargestellte Ansicht kommt dadurch zustande, dass die Ausbuchtungen 91 in einer Ebene, die im Winkel von 45° zur dargestellten Schnittebene steht, angeordnet sind. Durch die Ausbuchtungen 91 ist ein bestimmter Abstand des kreisscheibenförmigen Abschnitts 90 zur Stirnfläche 41 gewährleistet. An den kreisscheibenförmigen Abschnitt 90 schließt ein Befestigungsabschnitt 92 an. Dieser weist eine im wesentlichen kreiszylindrische Form auf und ist mit einem Außengewinde versehen. Der Befestigungsabschnitt 92 ist entlang der Längsachse mit einer gestuften Bohrung 93 versehen, die sich zu einer Steuerfluiddüse 96 verengt. Nahe des Übergangs von dem kreisscheibenförmigen Abschnitt 90 zum Befestigungsabschnitt 92 sind drei im Winkel von 120° versetzte Radialbohrungen 94 im Befestigungsabschnitt 92 vorhanden. Die Radialbohrungen 94 stoßen auf die Steuerfluiddüse 96. Der Befestigungsabschnitt 92 geht an seiner dem Eingangsanschluss 5 abgewandten Seite in einen umgebogenen Randabschnitt 95 über.

Zwischen dem kreisscheibenförmigen Abschnitt 90 und der Stirnfläche 41 ist wiederum ein Spalt 50 gebildet. An der äußeren, der Stirnfläche 41 zugewandten Kante des kreisscheibenförmigen Abschnitts 90 besteht eine ringförmige Spaltöffnung. Das Spaltmaß ist durch die noppenförmigen Ausbuchtungen 91 festgelegt. Die Steuerfluidzuführung zum Federraum 14 erfolgt also über den Spalt 50, der in die Vertiefung 86 übergeht, und über die Bohrungen, die innerhalb des Befestigungsabschnitts 92 angeordnet sind, d.h. die Bohrungen 94, die Steuerfluiddüse 96, sowie die Bohrung 93. Durch den umgebogenen Randabschnitt 95 ist der Teller 38 zuverlässig und verdrehsicher am Hauptsteuerkegel 10 gehalten.

Auch bei dieser Gestaltung des Tellers 38 und des Hauptsteuerkegels 10 sind nur wenige Bearbeitungsschritte am Kopfabschnitt 35 des Hauptsteuerkegels 10 auszuführen. Diese Bearbeitungsschritte, nämlich das Fertigen der Bohrung 36 und der Vertiefung 86, lassen sich unkompliziert und mit geringem Aufwand durchführen. Insbesondere sind keine Bohrungen geringen Durchmessers nötig, die bei einem Härtungsvorgang verzundern würden. Der Teller 38 wird zweckmäßigerweise aus einem einfach zu bearbeitenden Material, z.B. ungehärteter Stahl, Aluminium oder Messing, gefertigt. Die Form des Teller 38 erlaubt eine einfache Herstellung auf einer Drehmaschine mit einigen wenigen Nachbearbeitungsschritten. Die Ausbuchtungen 91 lassen sich z.B. durch einen einfachen Prägevorgang herstellen.

Bei einem vorgesteuerten Druckbegrenzungsventil in Schieberventilausführung (nicht dargestellt) - z.B. gemäß dem eingangs erwähnten Datenblatt RD 25731/10.05 - treten am Steuerfluideinlass am Hauptsteuerschieber ähnliche Effekte aufgrund von Strömungskräften auf. Daher kann die vorliegende Erfindung, wie anhand der Figuren 1a, 1b, 2 und 3 beschrieben, durch Anbringen eines Tellers am Hauptsteuerschieber analog bei diesem Ventiltyp angewandt werden.

Die vorliegende Erfindung soll hinsichtlich der Gestaltung des Tellers 38 nicht auf eine rotationssymmetrische Form beschränkt sein. Wenn dies zweckmäßig erscheint, kann z.B. auch ein ovaler Teller zur Anwendung kommen. Die Erfindung beruht auf der Erkenntnis, dass ein als Spalt zwischen einem Teller und einer Stirnfläche des Hauptsteuergliedes ausgeführter Steuerfluideinlass eine Verbesserung des Gleichdruckverhaltens und eine zuverlässige Filtration des Steuerfluids mit äußert geringen Mehraufwand bei der Herstellung des Druckbegrenzungsventils erlaubt.

### Bezugszeichenliste

- 1: Vorgesteuertes Druckbegrenzungsventil
- 3: Ventilgehäuse
- 5: Eingangsanschluss
- 6: Tankanschluss
- 8: Hülse
- 10: Hauptsteuerkegel
- 12: Bohrung
- 14: Federraum
- 16: Feder
- 18: Abschlusskappe
- 19: Fluidkanal
- 21: Hülseneinsatz
- 22: Vorsteuerkegel
- 24: Fluidkanal
- 25: Dämpfungsdüse
- 26: Feder
- 28: Einschraubbüchse
- 30: Fluidkanal
- 32: Sacklochvertiefung
- 33: Ringfläche
- 34: Stirnfläche
- 35: Kopfabschnitt
- 36: Bohrung
- 38: Teller
- 39: Schraube
- 41: Stirnfläche
- 42: Erhebung
- 46: Ringnut
- 48: Steuerfluiddüse
- 50: Spalt
- 70: Zentralabschnitt
- 72: Kragenabschnitt
- 75: Ringnutartige Vertiefung
- 86: Vertiefung
- 89: Kopfabschnitt
- 90: Kreisscheibenförmiger Abschnitt
- 91: Ausbuchtung
- 92: Befestigungsabschnitt
- 93: Längsbohrung
- 94: Radialbohrung
- 95: Randabschnitt
- 96: Steuerfluiddüse

## Patentansprüche

1. Vorgesteuertes Druckbegrenzungsventil mit einem Steuerglied (10), welches in Öffnungsrichtung an einer ersten Steuerfläche (41) von einem zu begrenzenden Druck beaufschlagbar ist und welches in Schließrichtung von einer Feder (16) und an einer zweiten Steuerfläche (33, 34) von einem in einem Steuerdruckraum (14) herrschenden Steuerdruck beaufschlagbar ist, und mit einem Vorsteuerventil (21, 22) durch das der in dem Steuerdruckraum (14) herrschende Druck begrenzbar ist, wobei dem Steuerdruckraum (14) Steuerfluid durch das Steuerglied (10) hindurch über eine Steuerfluiddüse (48) zuführbar ist,
**dadurch gekennzeichnet, dass**
vor der ersten Steuerfläche (41) ein Teller (38) am Steuerglied (10) gehalten ist,
dass zwischen dem Teller (38) und der ersten Steuerfläche (41) ein Spalt (50) mit einem vorgegebenen Spaltmaß gebildet ist
und dass der Spalt (50) stromauf der Steuerfluiddüse (48) gebildet ist.

2. Vorgesteuertes Druckbegrenzungsventil nach Anspruch 1, **dadurch gekennzeichnet, dass** das Steuerglied (10) eine Erhebung (42) aufweist, auf der der Teller (38) aufliegt.

3. Vorgesteuertes Druckbegrenzungsventil nach Anspruch 1, **dadurch gekennzeichnet, dass** an einer dem Steuerglied (10) zugewandten Seite des Tellers (38) eine Erhebung (91) gebildet ist, mit der dieser auf dem Steuerglied (10) aufliegt.

4. Vorgesteuertes Druckbegrenzungsventil nach Anspruch 3, **dadurch gekennzeichnet, dass** die Erhebung (91) durch eine noppenförmige Prägung des Tellers (38) gebildet ist.

5. Vorgesteuertes Druckbegrenzungsventil nach einem der Ansprüche 1 bis 4, **dadurch gekennzeichnet, dass** der Teller (38) einen hülsenförmig ausgebildeten Abschnitt (70) aufweist, der von einer dem Steuerglied (10) zugewandten Seite des Tellers (38) vorsteht, der ein Befestigungsmittel (39) aufnimmt, und mit dem der Teller (38) auf dem Steuerglied (10) aufsitzt.

6. Vorgesteuertes Druckbegrenzungsventil nach einem der Ansprüche 1 bis 4, **dadurch gekennzeichnet, dass** am Teller (38) ein kreiszylinderförmiger Gewindeabschnitt (92) gebildet ist, mit dem der Teller (38) in einer Bohrung (36) des Steuerglieds (10) befestigt ist.

7. Vorgesteuertes Druckbegrenzungsventil nach Anspruch 6, **dadurch gekennzeichnet, dass** die Steuerfluiddüse durch eine Bohrung (96) im Gewindeabschnitt (92) gebildet ist.

8. Vorgesteuertes Druckbegrenzungsventil nach einem der Ansprüche 1 bis 6, **dadurch gekennzeichnet, dass** die Steuerfluiddüse durch eine Bohrung (48) im Steuerglied (10) gebildet ist und dass eine Öffnung der Bohrung (48) durch den Teller (38) verdeckt ist.

9. Vorgesteuertes Druckbegrenzungsventil nach einem der Ansprüche 1 bis 8, **dadurch gekennzeichnet, dass** der Teller (38) im Wesentlichen die Form einer Kreisscheibe aufweist.

10. Vorgesteuertes Druckbegrenzungsventil nach einem der Ansprüche 1 bis 9, **dadurch gekennzeichnet, dass** der Teller (38) aus einem leicht zu verarbeitenden Metall, insbesondere ungehärteter Stahl, Aluminium oder Messing gefertigt ist.

11. Vorgesteuertes Druckbegrenzungsventil nach einem der Ansprüche 1 bis 10, **dadurch gekennzeichnet, dass** das Spaltmaß geringer ist als ein Durchmesser der Steuerfluiddüse (48).

12. Vorgesteuertes Druckbegrenzungsventil nach einem der Ansprüche 1 bis 11, **dadurch gekennzeichnet, dass** das Spaltmaß geringer ist als ein geringster Durchmesser eines Kanals (19, 24) vom Steuerdruckraum (14) zum Vorsteuerventil (21, 22), insbesondere geringer als ein Durchmesser einer Dämpfungsdüse (25) vor dem Vorsteuerventil (21, 22).

13. Vorgesteuertes Druckbegrenzungsventil nach einem der Ansprüche 1 bis 12, **dadurch gekennzeichnet, dass** das Spaltmaß geringer ist als 0.3 Millimeter, insbesondere dass es Werte von 0.15 Millimeter bis 0.25 Millimeter aufweist.

14. Vorgesteuertes Druckbegrenzungsventil nach einem der Ansprüche 1 bis 13, **dadurch gekennzeichnet, dass** die Steuerfluiddüse (48; 96) zu einer ringförmigen Vertiefung (46; 86) in der ersten Steuerfläche (41) bzw. zu einer ringförmigen Vertiefung (75) in einer der ersten Steuerfläche (41) zugewandten Seite des Tellers (38) hin öffnet.

15. Vorgesteuertes Druckbegrenzungsventil nach einem der Ansprüche 1 bis 14, **dadurch gekennzeichnet, dass** der Teller (38) an einem Hauptsteuerkegel (10) des Druckbegrenzungsventils gehalten ist.

## Claims

1. Pilot-controlled pressure-limiting valve, with a control member (10) which can be acted upon in the opening direction, on a first control face (41), by a pressure to be limited and which can be acted upon in the closing direction by a spring (16) and, on a second control face (33, 34), by a control pressure prevailing in a control-pressure space (14), and with a pilot control valve (21, 22), by means of which the pressure prevailing in the control-pressure space (14) can be limited, control fluid being able to be supplied to the control-pressure space (14) through the control member (10) via a control-fluid nozzle (48),
**characterized in that** a plate (38) is held on the control member (10) in front of the first control face (41), **in that** a gap (50) with a predetermined gap dimension is formed between the plate (38) and the first control face (41), and **in that** the gap (50) is formed upstream of the control-fluid nozzle (48).

2. Pilot-controlled pressure-limiting valve according to Claim 1, **characterized in that** the control member (10) has an elevation (42) on which the plate (38) lies.

3. Pilot-controlled pressure-limiting valve according to Claim 1, **characterized in that**, on a side of the plate (38) which faces the control member (10), an elevation (91) is formed, with which the said plate lies on the control member (10).

4. Pilot-controlled pressure-limiting valve according to Claim 3, **characterized in that** the elevation (91) is formed by a knob-shaped embossing of the plate (38).

5. Pilot-controlled pressure-limiting valve according to one of Claims 1 to 4, **characterized in that** the plate (38) has a portion (70) of sleeve-shaped form, which projects from a side of the plate (38) facing the control member (10) and which receives a fastening means (39) and with which the plate (38) sits on the control member (10).

6. Pilot-controlled pressure-limiting valve according to one of Claims 1 to 4, **characterized in that**, on the plate (38), a circular-cylindrical threaded portion (92) is formed, by means of which the plate (38) is fastened in a bore (36) of the control member (10).

7. Pilot-controlled pressure-limiting valve according to Claim 6, **characterized in that** the control-fluid nozzle is formed by a bore (96) in the threaded portion (92).

8. Pilot-controlled pressure-limiting valve according to one of Claims 1 to 6, **characterized in that** the control-fluid nozzle is formed by a bore (48) in the control member (10), and **in that** an orifice of the bore (48) is concealed by the plate (38).

9. Pilot-controlled pressure-limiting valve according to one of Claims 1 to 8, **characterized in that** the plate (38) is essentially in the form of a circular disc.

10. Pilot-controlled pressure-limiting valve according to one of Claims 1 to 9, **characterized in that** the plate (38) is manufactured from an easily processable metal, in particular unhardened steel, aluminium or brass.

11. Pilot-controlled pressure-limiting valve according to one of Claims 1 to 10, **characterized in that** the gap dimension is smaller than a diameter of the control-fluid nozzle (48).

12. Pilot-controlled pressure-limiting valve according to one of Claims 1 to 11, **characterized in that** the gap dimension is smaller than a smallest diameter of a duct (19, 24) from the control-pressure space (14) to the pilot control valve (21, 22), in particular smaller than a diameter of a damping nozzle (25) in front of the pilot control valve (21, 22).

13. Pilot-controlled pressure-limiting valve according to one of Claims 1 to 12, **characterized in that** the gap dimension is smaller than 0.3 millimetre, in particular in that it has values of 0.15 millimetre to 0.25 millimetre.

14. Pilot-controlled pressure-limiting valve according to one of Claims 1 to 13, **characterized in that** the control-fluid nozzle (48; 96) opens towards an annular depression (46; 86) in the first control face (41) or towards an annular depression (75) in a side of the plate (38) which faces the first control face (41).

15. Pilot-controlled pressure-limiting valve according to one of Claims 1 to 14, **characterized in that** the plate (38) is held on a main control cone (10) of the pressure-limiting valve.

## Revendications

1. Soupape de limitation de la pression préasservie comprenant un organe de commande (10), qui peut être sollicité dans la direction de l'ouverture au niveau d'une première surface de commande (41) par une pression à limiter, et qui peut être sollicité dans la direction de la fermeture par un ressort (16) et au niveau d'une deuxième surface de commande (33, 34) par une pression de commande régnant dans un espace de pression de commande (14), et comprenant une soupape préasservie (21, 22) qui permet de limiter la pression régnant dans l'espace de pression de commande (14), l'espace de pression de commande (14) pouvant être alimenté en fluide de commande à travers l'organe de commande (10) par le biais d'une buse de fluide de commande (48),
**caractérisée en ce que**
la première surface de commande (41) maintient une coupelle (38) contre l'organe de commande (10),
**en ce qu'**entre la coupelle (38) et la première surface de commande (41) est formée une fente (50) avec une dimension de fente prédéterminée,
et **en ce que** la fente (50) est formée en amont de la buse de fluide de commande (48).

2. Soupape de limitation de la pression préasservie selon la revendication 1, **caractérisée en ce que** l'organe de commande (10) présente un rehaussement (42) sur lequel repose la coupelle (38).

3. Soupape de limitation de la pression préasservie selon la revendication 1, **caractérisée en ce qu'**un rehaussement (91) est formé d'un côté de la coupelle (38) tourné vers l'organe de commande (10), avec lequel la coupelle vient en contact avec l'organe de commande (10).

4. Soupape de limitation de la pression préasservie selon la revendication 3, **caractérisée en ce que** le rehaussement (91) est formé par une empreinte en forme de bouton de la coupelle (38).

5. Soupape de limitation de la pression préasservie selon l'une quelconque des revendications 1 à 4, **caractérisée en ce que** la coupelle (38) présente une portion (70) en forme de douille, qui fait saillie depuis un côté de la coupelle (38) tourné vers l'organe de commande (10), qui reçoit un moyen de fixation (39) et avec laquelle la coupelle (38) repose sur l'organe de commande (10).

6. Soupape de limitation de la pression préasservie selon l'une quelconque des revendications 1 à 4, **caractérisée en ce qu'**une portion filetée (92) de forme cylindrique circulaire est formée sur la coupelle (38), avec laquelle la coupelle (38) est fixée dans un alésage (36) de l'organe de commande (10).

7. Soupape de limitation de la pression préasservie selon la revendication 6, **caractérisée en ce que** la buse de fluide de commande est formée par un alésage (96) dans la portion filetée (92).

8. Soupape de limitation de la pression préasservie selon l'une quelconque des revendications 1 à 6, **caractérisée en ce que** la buse de fluide de commande est formée par un alésage (48) dans l'organe de commande (10), et **en ce qu'**une ouverture de l'alésage (48) est recouverte par la coupelle (38).

9. Soupape de limitation de la pression préasservie selon l'une quelconque des revendications 1 à 8, **caractérisée en ce que** la coupelle (38) présente essentiellement la forme d'un disque circulaire.

10. Soupape de limitation de la pression préasservie selon l'une quelconque des revendications 1 à 9, **caractérisée en ce que** la coupelle (38) se compose d'un métal facile à usiner, notamment d'acier non trempé, d'aluminium ou de laiton.

11. Soupape de limitation de la pression préasservie selon l'une quelconque des revendications 1 à 10, **caractérisée en ce que** la dimension de la fente est inférieure à un diamètre de la buse de fluide de commande (48).

12. Soupape de limitation de la pression préasservie selon l'une quelconque des revendications 1 à 11, **caractérisée en ce que** la dimension de la fente est inférieure à un diamètre le plus petit d'un canal (19, 24) allant de l'espace de pression de commande (14) à la soupape préasservie (21, 22), notamment inférieure à un diamètre d'une buse d'amortissement (25) avant la soupape préasservie (21, 22).

13. Soupape de limitation de la pression préasservie selon l'une quelconque des revendications 1 à 12, **caractérisée en ce que** la dimension de la fente est inférieure à 0,3 mm, notamment **en ce qu'**elle présente des valeurs comprises entre 0,15 mm et 0,25 mm.

14. Soupape de limitation de la pression préasservie selon l'une quelconque des revendications 1 à 13, **caractérisée en ce que** la buse de fluide de commande (48 ; 96) ouvre vers un renfoncement annulaire (46 ; 86) dans la première surface de commande (41) ou vers un renfoncement annulaire (75) dans un côté de la coupelle (38) tourné vers la première surface de commande (41).

15. Soupape de limitation de la pression préasservie selon l'une quelconque des revendications 1 à 14, **caractérisée en ce que** la coupelle (38) est maintenue sur un cône de commande principal (10) de la soupape de limitation de pression.
